# EUROPEAN PATENT APPLICATION

(11) **EP 2 559 465 A1**
(43) Date of publication of application: **20.02.2013**
(21) Application number: 11768575.0
(22) Date of filing: 18.02.2011
(51) Int. Cl.: A63F 13/10, A63F 13/12

(54) **GAME SUPPORT SERVER, GAME DEVICE, GAME SUPPORT SYSTEM AND GAME SUPPORT METHOD**

(30) Priority: 14.04.2010 JP 2010093517
(71) Applicant: Sony Computer Entertainment Inc., Tokyo 108-0075 (JP)
(72) Inventor: CHATANI, Masayuki, Tokyo 108-0075 (JP)
(74) Representative: Müller - Hoffmann & Partner
(86) International application number: PCT/JP2011/000898
(87) International publication number: WO 2011/129048

(57) **Abstract**

A game support server (100) is provided with: a skill level acquisition unit (182) which acquires a skill level that indicates the proficiency level of a game device user at a game; a game database (192) wherein a standard time needed for the execution of games which are executed by the game device are stored; a recommendation request reception unit (184) which acquires, from the game device, a desired time for which the user wants to execute the game, and receives a request for a recommendation for a game which fits the desired time; and a recommendation candidate extraction unit (185) which calculates an expected time, which is expected to be required for the user to execute the game, by revising the standard time according to the acquired user skill level, and extracts a game for which the difference between the expected time and the desired time does not exceed a specified value, as a recommendation candidate, from the game database (192); and a recommendation candidate presentation unit (186) which presents the extracted game recommendation candidate to the game device.

## Description

### [TECHNICAL FIELD]

The present invention relates to a technique for supporting the user of a game apparatus.

### [BACKGROUND ART]

Portable game terminals have become broadly popular, which allow a user to enjoy a game with ease even if the user is away from home. An increasing number of users enjoy a game when they have a few minutes of spare time, in a period of time when they are on the move, such as being on a train, or when they are waiting to meet someone. In addition, portable game terminals have become available which have a function of establishing a connection to the Internet via access points installed in urban areas and the like. Such portable game terminals allow the user to enjoy a new game after it is downloaded even if the user is away from home.

There is a demand for a service which is configured such that, before the user downloads a new game, it predicts the user's preferences based upon the user action history, and to recommend a game suitable for the user, which is convenient. As a technique for acquiring and analyzing log information which specifies the user action history, Patent document 1 is known, for example.

### [Related Art Documents]

### [Patent Documents]

[patent document 1]
   Japanese Patent Application Laid Open No. 2003-58395 (which corresponds to USP 7,558,820)

### [DISCLOSURE OF THE INVENTION]

### [PROBLEM TO BE SOLVED BY THE INVENTION]

However, when the user desires to take on a new game in the user's spare time, there is no information with respect to the time required for the game. Accordingly, a prediction cannot be made beforehand of whether or not the user can finish the game in the user's spare time. If the user cannot finish the game in the user's spare time, the user must suspend the game before the user finishes the game, or otherwise the user must save the game in an unsatisfactory state. That is to say, although the user initiates a game, such a game has the potential to waste the user's spare time. Accordingly, in many cases, even if the user has spare time, the user selects one from among a limited number of games with respect to which the user can estimate the time required to finish the game, i.e., games which have already been played. That is to say, this leads to the user losing the chance to take on a new game.

Accordingly, it is a general purpose of the present invention to provide a technique for supporting game device users, and for providing improved user convenience.

### [MEANS TO SOLVE THE PROBLEM]

In order to solve the aforementioned problem, a game support server according to the present embodiment comprises: a skill level acquisition unit configured to acquire, from a first game apparatus, a skill level that indicates a user's degree of skill in a game; a game database configured to store a standard time required to play a game; a recommendation request receiving unit configured to acquire, from a second game apparatus, a desired time period that the user wishes to spend playing a game, and to receive a request to recommend at least one candidate game that matches the desired time; a recommended candidate extraction unit configured to modify the standard time according to a user's skill level acquired by the skill level acquisition unit so as to calculate an estimated time that is an estimate of time to be required for the user to play a game, and to extract, as a recommended candidate game from the game database, a game if the difference between the estimated time and the desired time is less than or equal to a predetermined value; and a recommended candidate presenting unit configured to present to the second game apparatus the recommended candidate game thus extracted by the recommended candidate extraction unit.

A game apparatus according to another embodiment of the present invention comprises: a recommendation request transmitting unit configured to acquire a desired time that the user wishes to spend playing a game, and to request that a game support server recommend games matching the desired time; a recommended candidate acquisition unit configured to acquire, from the game support server, at least one recommended candidate game if the difference between the desired time and an estimated time, which is an estimate of time required for a user to play the game calculated by modifying a standard time required for game play according to a skill level indicating the user's degree of skill in the game, is less than or equal to a predetermined value; and a recommended candidate display unit configured to display the recommended candidate game acquired by the recommended candidate acquisition unit.

It should be noted that any combination of the aforementioned components or any manifestation of the present invention may be mutually substituted between a method, apparatus, system, recording medium, computer program, and so forth, which are effective as an embodiment of the present invention.

### [ADVANTAGE OF THE PRESENT INVENTION]

The present invention provides a technique for providing improved convenience for the user of a game apparatus.

### [BRIEF DESCRIPTION OF THE DRAWINGS]

Fig. 1 is a diagram which shows a configuration of a game support system according to an embodiment;
Fig. 2A is a front view showing a portable information terminal in the closed state according to the embodiment, and Fig. 2B is a front view showing the portable information terminal in the open state according to the embodiment;
Fig. 3A is a view showing the upper face of the portable information terminal according to the embodiment, and Fig. 3B is a view showing the lower face of the portable information terminal according to the embodiment;
Fig. 4A is a view showing the left side face of the portable information terminal according to the embodiment, and Fig. 4B is a view showing the right side face of the portable information terminal according to the embodiment;
Fig. 5 is a diagram which shows a circuit configuration of the portable information terminal according to the embodiment;
Fig. 6 is a diagram which shows a functional configuration of the portable information terminal according to the embodiment;
Fig. 7 is a diagram which shows a circuit configuration of a game support server according to an embodiment;
Fig. 8 is a diagram which shows a functional configuration of the game support server according to the embodiment;
Fig. 9 is a diagram which shows an example of an internal data structure of a game database according to an embodiment;
Fig. 10 is a diagram which shows an example of an internal data structure of a user database according to an embodiment;
Fig. 11 is a sequence diagram which shows a procedure of a game support method according to an embodiment;
Fig. 12 is a view showing an example of a screen displayed on a display on the portable information terminal according to the embodiment;
Fig. 13 is a sequence diagram which shows a procedure for updating the standard play time and the user's skill level in the game support method according to the embodiment;
Fig. 14 is a sequence diagram which shows a procedure for providing the game support method according to the embodiment; and
Fig. 15 is a sequence diagram which shows a procedure for providing the game support method according to the embodiment.

### [BEST MODE FOR CARRYING OUT THE INVENTION]

### [First embodiment]

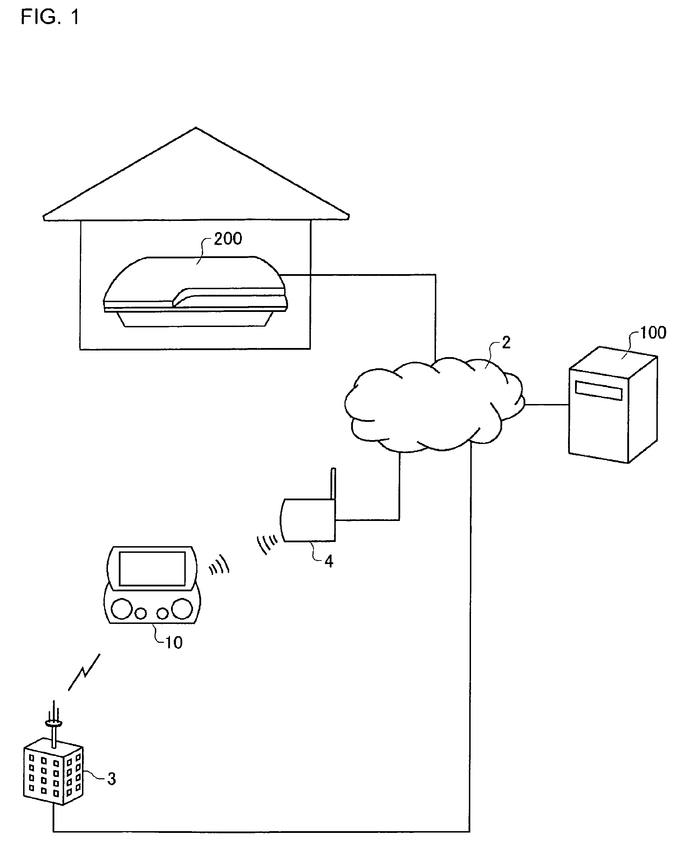

Fig. 1 is a schematic diagram which shows a configuration of a game support system 1 according to an embodiment. The game support system 1 includes a game support server 100, a portable information terminal 10, and a game apparatus 200. The game support server 100, the portable information terminal 10, and the game apparatus 200 are connected via the Internet 2, which is an example of a network, such that they can communicate with each other.

The portable information terminal 10 is configured to perform processing of programs and data stored on a recording medium such as a mounted memory card or the like, and perform processing of programs and data acquired by communicating with an external device such as a server or the like. Examples of such programs and data to be processed include game programs, image data, and audio data. The portable information terminal 10 is configured to perform wireless communication between itself and an access point 4 by means of a wireless communication control unit 67 described later, and to be connected to the Internet 2 via the access point 4. Similarly, the portable information terminal 10 is configured to perform wireless communication between itself and the cellular phone network 3 by means of a cellular phone network communication control unit 69 described later, and to be connected to the Internet 2 via the cellular phone network 3.

The game apparatus 200 is configured as a stationary home game apparatus installed in the user's home, for example. The portable information terminal 10 and the game apparatus 200 each correspond to an example of a game apparatus according to the present invention. With such an arrangement, in the user's home, the user can enjoy a game mainly using the game apparatus 200, and when the user is away from home, the user can enjoy a game using the portable information terminal 10.

The game support server 100 is configured to recommend a suitable game for the user according to a request by the user received from the portable information terminal 10. In this stage, the game support server 100 is configured to acquire an amount of time which the user desires to spend playing a game, to extract game candidates that can be finished by the user in just the amount of time the user desires to spend, and to recommend the game candidates thus extracted for the user. Thus, such an arrangement allows the user to enjoy such a game effectively in an amount of time that matches the user's spare time. Furthermore, such an arrangement provides the user with a chance to take on a new game in the user's spare time, thereby contributing to the promotion of game distribution.

The game support server 100 holds the standard play time for each game. Furthermore, the game support server 100 is configured to acquire a skill level which indicates the user's game skill. The game support server 100 is configured to estimate the play time required for the user according to the skill level of the user based upon the standard play time, to extract games for which the estimated play time matches the user's desired time period, and to recommend the games thus extracted for the user.

The game support server 100 is configured to acquire game execution history from game apparatuses 200 and portable information terminals 10 in order to calculate the standard play time for each game. Furthermore, the game support server 100 is configured to acquire the game execution history from game apparatuses 200 and portable information terminals 10 in order to calculate the skill levels of each user. The game support server 100 may be configured to acquire the game execution history from only portable information terminals 10. In this case, the game support system 1 is not required to include game apparatuses 200.

First, description will be made below regarding an external configuration and a circuit configuration of the portable information terminal 10. Next, description will be made regarding a functional configuration of the portable information terminal 10 configured to provide a game support method according to the present embodiment, and detailed description will be made regarding the operation of each functional component. Furthermore, description will be made regarding a circuit configuration of the game support server 100. Next, description will be made regarding a functional configuration of the game support server 100 configured to provide the game support method according to the present embodiment, and detailed description will be made regarding the operation of each functional component. Lastly, detailed description will be made with reference to a sequence diagram regarding the game support method employed in the game support system 1.

### [External configuration of the portable information terminal]

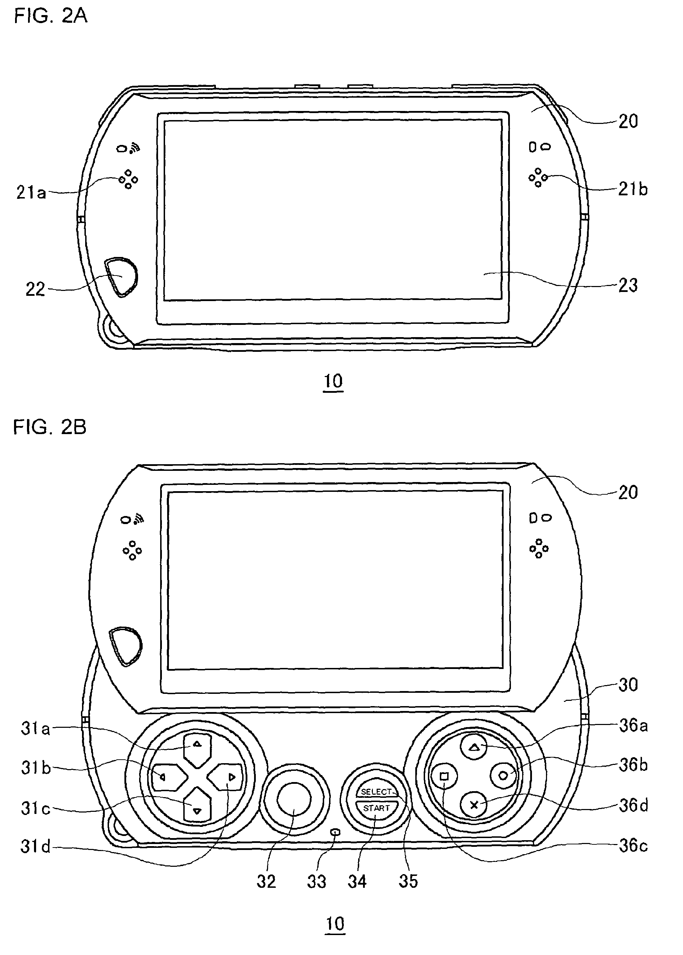

Figs. 2A and 2B show an external configuration of the portable information terminal 10 according to the present embodiment. The portable information terminal 10 includes a casing 12 and a terminal main unit 13 housed in the casing 12 and configured to execute the aforementioned processing. The casing 12 includes an upper casing 20 positioned on the near side (front face side) from the point of view of the user who holds the portable information terminal 10, and a lower casing 30 positioned on the rear face side of the upper casing 20. The upper casing 20 and the lower casing 30 are each configured having an elliptical shape obtained by extending a rectangle having long sides along the horizontal direction (horizontal direction in Figs. 2A and 2B) so as to form arc-shaped protuberances at both the left and right ends as viewed from the front face side (the side corresponding to the user). The upper casing 20 is configured to have a size that is slightly greater than that of the lower casing 30.

The lower casing 30 includes a metal frame member 52 configured to cover the outer edge of the upper casing 20. The size of the lower casing 30 is greater than that of the upper casing 20 to an extent that is equal to the size of the frame member 52. The upper casing 20 and the lower casing 30 are each formed in an approximately flat shape, and are configured such that one casing can be slid with respect to the other casing. It should be noted that description will be made in the present embodiment regarding an arrangement in which the upper casing 20 and the lower casing 30 are each formed of synthetic resin. Also, these casings 20 and 30 may be formed of metal.

Fig. 2A is a front view of the portable information terminal 10 when it is in the closed state. Fig. 2B is a front view of the portable information terminal 10 when it is in the open state. In the closed state of the portable information terminal 10, the upper casing 20 is positioned above the lower casing 30 such that the upper casing almost completely covers the lower casing 30. In this state, operation keys provided on the front face of the lower casing 30 are not exposed to the outside. By sliding the lower casing 30 with respect to the lower casing 20 in the closed state, such an arrangement allows the user to switch the portable information terminal 10 to the open state in which the operation keys provided on the front face of the lower casing 30 are exposed to the outside.

### [Configuration of front part]

A display 23 is provided in approximately the central area of the upper casing 20. The display 23 is housed in the upper casing 20, and has a structure in which a transparent touch panel is stacked on a liquid crystal display panel. A translucent member 24 is provided on the area of the upper casing 20 that corresponds to the display 23. Such an arrangement allows the user to view an image displayed on the display 23 via the translucent member 24. It should be noted that the display 23 may include other kinds of display devices such as an organic EL (Electro-Luminescent) panel or the like, instead of the liquid crystal display panel.

Audio output openings 21a and 21b, which form a pair of audio output openings, are respectively provided on the left and right sides of the translucent member 24 so as to output sound output from a speaker (not shown) housed within the upper casing 20. Furthermore, indicators 25a and 25b are respectively provided to the left side and the right side above the audio output openings 21a and 21b. The left-side indicator 25a indicates the communication state provided by a wireless module described later. The right-side indicator 25b indicates the communication state provided by Bluetooth (trademark). The indicators 25a and 25b are each configured as an LED (Light Emitting Diode). A button 22 is provided below the left-side audio output opening 21a on the left side of the front part of the upper casing 20. The button 22 is configured such that it can be pressed in the depth direction. The button 22 is assigned to a function of switching the program which is currently executed, a function of ending a game, a function of temporarily suspending a game, or the like. A front-face camera 68a is provided above the indicator 25b on the right side of the front face part of the upper casing 20. Similarly, a rear-face camera 68b (not shown) is provided in the central area along the horizontal direction on the rear face part of the lower casing 30.

As shown in Fig. 2B, the area which is exposed when the upper casing 20 is slid upward with respect to the lower casing 30 includes direction keys 31a, 31b, 31c, and 31d (which will be collectively referred to as the "direction keys 31") on the left side such that they allow the user to input a direction instruction from among eight directions, i.e., the upper direction, lower direction, left direction, right direction, and four oblique directions, and four buttons 36a, 36b, 36c, and 36d (which will be collectively referred to as the "buttons 36") on the right side such that they are positioned at apexes of a diamond shape. Furthermore, an analog pad 32 is arranged on the left side between the direction keys 31 and the buttons 36, and is configured to detect friction applied along the front part, and to detect the direction of the friction thus applied. Moreover, a start button 34 and a select button 35 are arranged on the right side in the form of a pair of semicircular buttons including the start button 34 and the select button 35 arranged in parallel along the vertical direction. A microphone 33 is arranged between the analog pad 32 and the area where the start button 34 and the select button 35 are arranged. After the portable information terminal 10 is set to the open state, such an arrangement allows the user to operate such operation keys.

A strap attachment opening 53 is formed in the left corner of the lower casing 30, which allows the user to attach a strap (not shown). The strap attachment opening 53 is formed in the aforementioned frame member 52. Furthermore, indicators 54a and 54b, which form a pair of indicators, are respectively formed on the left edge and the right edge in an approximately central area along the vertical direction on the front face part of the lower casing 30. The left-side indicator 54a is configured to indicate the readout/recording state of data from/into a memory card (not shown) mounted on the terminal main unit 13 via the media card slot 41. The right-side indicator 54b is configured to indicate the on/off state of a power supply for the portable information terminal 10. The indicators 54a and 54b are each configured as an LED. As shown in Figs. 2A and 2B, the indicators 54a and 54b are arranged at positions such that they are not covered by the upper casing 20, thereby allowing the user to check the on/off state of the indicators 54a and 54b even if the lower casing 30 is covered by the upper casing 20.

### [Configuration of upper face part]

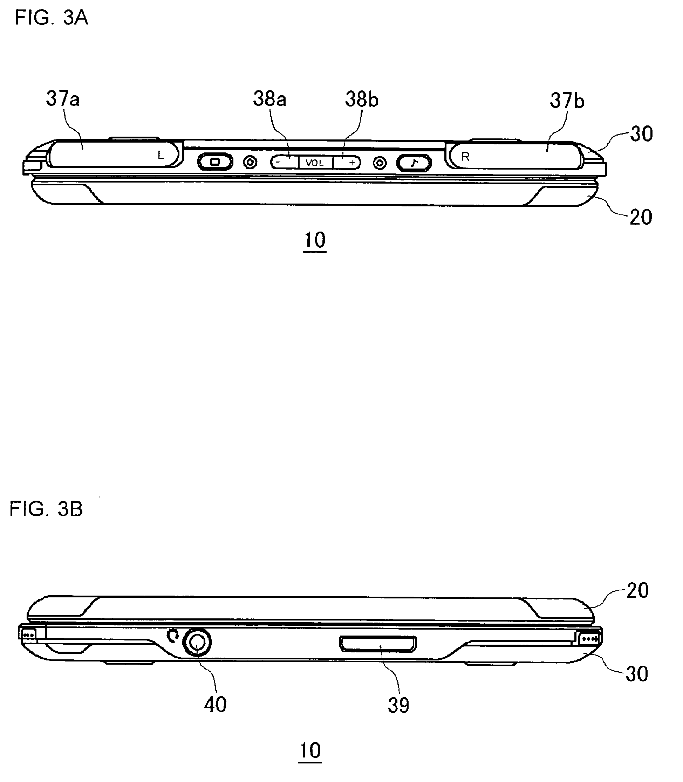

Fig. 3A shows the upper face of the portable information terminal 10. A left button 37a and a right button 37b, which form a pair of buttons, are arranged on both ends along the horizontal direction. The button arranged on the left side of the upper face part will be referred to as the "left button 37a", and the button arranged on the right side thereof will be referred to as the "right button 37b". The left button 37a and the right button 37b are each configured in an approximately L shape such that one side of the L-shaped button 37 extends along the upper face part and the other side thereof extends along the corresponding left side face part or otherwise right side face part. That is to say, the left button 37a and the right button 37b are arranged such that they each extend over the upper face part and the corresponding left face part or otherwise right face part. Volume buttons 38a and 38b, which form a pair of buttons, are arranged in an approximately central area on the upper face part, which allows the user to adjust the volume of sound out from the speaker.

### [Configuration of lower face part]

Fig. 3B shows the lower face of the portable information terminal 10. A stereo input/output terminal 40 is arranged on the left side of the lower face part of the lower casing 30, which allows the user to connect a headphone to the portable information terminal 10. Furthermore, a connection terminal 39 is arranged on the right side thereof, which allows the user to connect the portable information terminal 10 to a cradle (not shown) configured as an external device.

### [Configuration of left side face part]

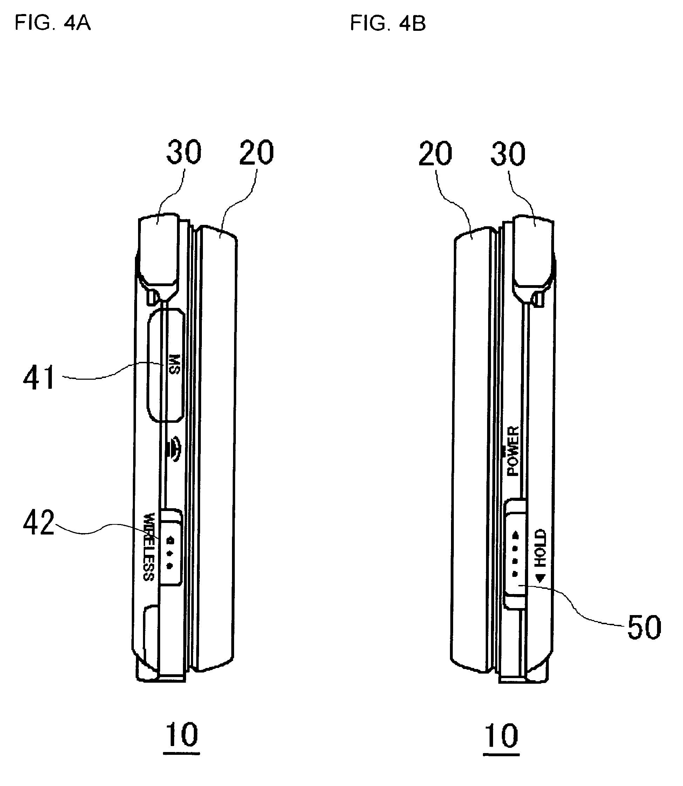

Fig. 4A shows the left side face of the portable information terminal 10. The upper end of the left side face part of the lower casing 30 is covered by a part of the left button 37a. The media card slot 41 is arranged on the upper side of the left side face part, which allows the user to detachably insert a memory card. A cover is arranged such that it covers the insertion opening of the media card slot 41. A key 42 is arranged on the lower side of the left side face part, and is configured such that it is slidable along the left side face part. The key 42 is configured to allow the user to switch the on/off state of the wireless module.

### [Configuration of right side face part]

Fig. 4B shows the right side face of the portable information terminal 10. The upper end of the right side face part of the lower casing 30 is covered by a part of the right button 37b, as with the left side face part. A power supply/hold switch 50 is arranged on the lower side of the right side face part, and is configured such that it is slidable along the right side face part. When the user slides the power supply/hold switch 50 upward, the power supply for the portable information terminal 10 is turned on. When the user again slides the power supply/hold switch 50 upward, the power supply for the portable information terminal 10 is turned off. When the user slides the power supply/hold switch 50 downward, the portable information terminal 10 is switched to a hold state in which the input operations of other keys are canceled. When the portable information terminal 10 is in the closed state, the operation keys arranged on the front face of the lower casing 30 are not exposed to the outside. In contrast, the button 22, the left button 37a, and the right button 37b are always exposed to the outside. Thus, when the user desires to suspend use of the portable information terminal 10, by sliding the power supply/hold switch 50 downward, such an arrangement allows the key operations of the button 22, the left button 37a, and the right button 37b to be disabled, thereby avoiding unintended accidental operation of the operation keys.

### [Circuit configuration of portable information terminal 10]

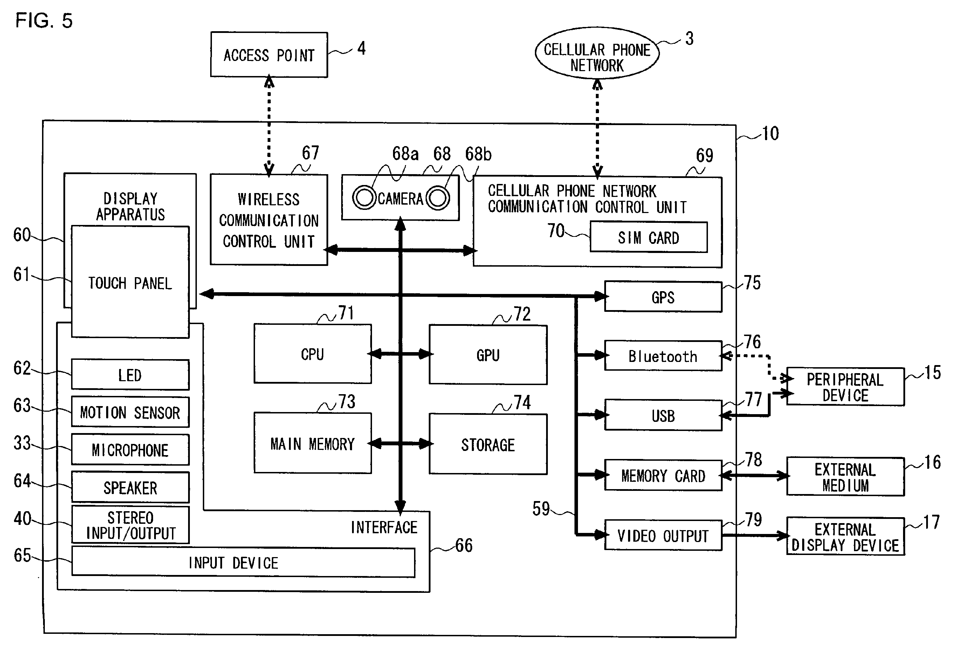

Fig. 5 shows a circuit configuration of the portable information terminal 10. A display apparatus 60 is configured to display a display screen generated by means of respective functions of the portable information terminal 10. The display apparatus 60 may be configured as a liquid crystal display apparatus, or may be configured as an organic EL display apparatus, as described above. A touch panel 61 is arranged on the display device 60 such that they are stacked, and is configured to detect being touched by the user's finger or otherwise by a pen. The touch panel 61 may be configured using various kinds of methods such as a resistive touch panel method, a surface capacitive touch panel method, a projected capacitive touch panel method, and so forth. As described above, the display 23 comprises the display apparatus 60 and the touch panel 61.

LEDs 62 are configured as the aforementioned indicators 25a, 25b, 54a, and 54b. A motion sensor 63 is configured to detect the motion of the portable information terminal 10. A microphone 33 is configured to input sound around the portable information terminal 10. A speaker 64 is configured to output sound generated by means of respective functions of the portable information terminal 10. The stereo input/output terminal 40 is configured to receive stereo sound as an input signal via an external microphone, and to output stereo sound to an external headphone or the like. An input device 65 includes the aforementioned operation keys and so forth, and is configured to receive operations input by the user. The touch panel 61, the LEDs 62, the motion sensor 63, the microphone 33, the speaker 64, the stereo input/output terminal 40, and the input device 65, described above, are configured to mutually transmit/receive data to/from a CPU 71 or the like via an interface 66.

The wireless communication control unit 67 is configured using a wireless LAN (Wireless Local Area Network) that conforms to a communication standard such as IEEE 802.11b/g or the like, and is configured to wirelessly communicate with the access point 4 or the like, and to control the communication between the portable information terminal 10 and the game support server 100 via the access point 4 and the Internet 2, as shown in Fig. 1. A camera 68 is configured to acquire an image, and to input the image data thus acquired. A cellular phone network control unit 69 is configured to be compatible with the third generation digital cellular phone method that conforms to the IMT-2000 standard stipulated by the ITU (International Telecommunication Union). As shown in Fig. 1, the cellular phone network control unit 69 is configured to control communication between the portable information terminal 10 and the game support server 100 via the cellular phone network 3 and the Internet 2. A SIM card 70 stores ID numbers uniquely assigned for cellular phone number identification. After the SIM card 70 is inserted into the portable information terminal 10, such an arrangement allows the portable information terminal 10 to perform communication via the cellular phone network. The camera 68 is configured as a front-face camera 68a and a rear-face camera 68b each configured as a CMOS image sensor (Complementary Metal Oxide Semiconductor Image Sensor). The front-face camera 68a and the rear-face camera 68b are configured to acquire images toward the front side and the rear side, respectively, and to output the images thus acquired in the form of image data.

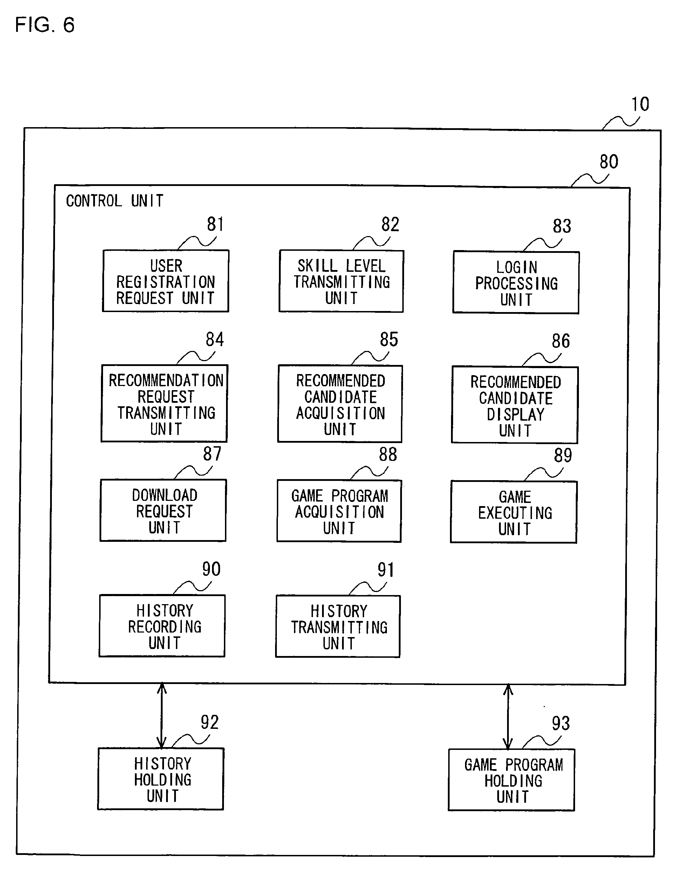

The CPU (Central Processing Unit) 71 is configured to execute a program or the like loaded into main memory 73, thereby providing the respective functional components shown in Fig. 6. A GPU (Graphics Processing Unit) 72 is configured to execute calculation required for image processing. The main memory 73 is configured as RAM (Random Access Memory) or the like, and is configured to store programs and data to be executed on the portable information terminal 10. Storage 74 is configured as NAND-type flash memory or the like, and is configured to store programs, data, and so forth, which are to be used by each component of the portable information terminal 10.

A GPS (Global Positioning System) control unit 75 is configured to receive a signal from GPS satellites, and to calculate the current position. A Bluetooth control unit 76 is configured to control wireless communication between the portable information terminal 10 and a peripheral apparatus 15 via a Bluetooth interface. A USB control unit 77 is configured to control communication between the portable information terminal 10 and the peripheral apparatus 15 via a USB interface. A memory card control unit 78 is configured to control reading/writing of data from/to an external medium 16. A video output control unit 79 is configured to output a video signal to an external display device 17 according to a standard such as HDMI.

### [Functional configuration of portable information terminal 10]

Fig. 6 shows a functional configuration of the portable information terminal 10 according to the present embodiment. Fig. 6 shows the functional components configured to provide the game support method according to the present embodiment, and the other components are not shown. Each component represented as a functional block configured to perform various kinds of processing may be realized by means of hardware devices such the CPU 71, the main memory 73, and other LSIs, or may be realized by means of software components such as a program or the like loaded into the main memory 73. Such functional blocks can be realized by hardware components alone, software components alone, or various combinations thereof, which can be readily conceived by those skilled in this art.

The cellular phone information terminal 10 includes a control unit 80, a history holding unit 92, and a game program holding unit 93. The control unit 80 is configured mainly as the CPU. The history holding unit 92 and the game program holding unit 93 are each configured mainly as the main memory 73 or otherwise the storage 74. The control unit 80 includes a user registration request unit 81, a skill level transmitting unit 82, a login processing unit 83, a recommendation request transmitting unit 84, a recommended candidate acquisition unit 85, a recommended candidate display unit 86, a download request unit 87, a game program acquisition unit 88, a game executing unit 89, a history recording unit 90, and a history transmitting unit 91.

The user registration request unit 81 is configured to request the game support server 100 to register a user. The user registration request unit 81 is configured to transmit, to the game support server 100, authentication information such as the user name, password, and so forth, and the user's attribution information or favorite information such as preferred games and so forth.

The skill level transmitting unit 82 is configured to transmit, to the game support server 100, the skill level which indicates the user's skill in games. With the present embodiment, when the user registration request unit 81 requests user registration, the skill level transmitting unit 82 is configured to receive the self-reported skill level from the user, and to transmit the skill level thus received to the game support server 100. As described later, the user's skill level is updated by the game support server 100 as the user plays a game using the portable information terminal 10 or otherwise the game apparatus 200.

The login processing unit 83 is configured to execute login processing to establish a login to the game support server 100 before the user receives a service from the game support server 100. Upon receiving an instruction from the user to log in to the game support server 100, the login processing unit 83 is configured to receive authentication information from the user as input data such as a password or the like, and to transmit the authentication information thus received to the game support server 100.

The recommendation request transmitting unit 84 is configured to request the game support server 100 to recommend game candidates which can be played by the user in the user's spare time and the like. In this stage, the recommendation request transmitting unit 84 is configured to receive the desired play time for the game from the user, and to transmit the desired play time thus received to the game support server 100. The recommended candidate acquisition unit 85 is configured to acquire the game candidates thus recommended from the game support server 100. The recommended candidate display unit 86 is configured to display, on the display 23, the recommended game candidates acquired by the recommended candidate acquisition unit 85.

The download request unit 87 is configured to request the game support server 100 to download a game program selected by the user from among the recommended game candidates displayed by the recommended candidate display unit 86. When the game program holding unit 93 stores a game program selected by the user in this stage, the download request unit 87 does not request the game support server 100 to download the game program, and the game executing unit 89 executes the game program. The game program acquisition unit 88 is configured to acquire the game program thus downloaded from the game support server 100, and the game program holding unit 93 stores the game program thus acquired. The game executing unit 89 is configured to read out, from the game program holding unit 93, the game program thus selected by the user, and to execute the game program thus read out.

The history recording unit 90 is configured to record, in the history holding unit 92, the information which indicates the game history executed by the game executing unit 89. The history recording unit 90 is configured to record the information such as the title of the executed game, the date on which the game was executed, the time required to execute the game, the game score, and so forth. The history transmitting unit 91 is configured to read out the history information held by the history holding unit 92, and to transmit the history information thus read out to the game support server 100. The history information is used by the game support server 100 to calculate the standard time required for the game, and to calculate the user's skill level, as described later. The history transmitting unit 91 may be configured to transmit the history information to the game support server 100 when the game executing unit 89 starts to execute the game. Also, the history transmitting unit 91 may be configured to transmit the history information to the game support server 100 when the game executing unit 89 ends execution of the game. Also, the history transmitting unit 91 may be configured to transmit the history information to the game support server 100 when the recommendation request transmitting unit 84 transmits a recommendation request to the game support server 100.

### [Circuit configuration of game support server 100]

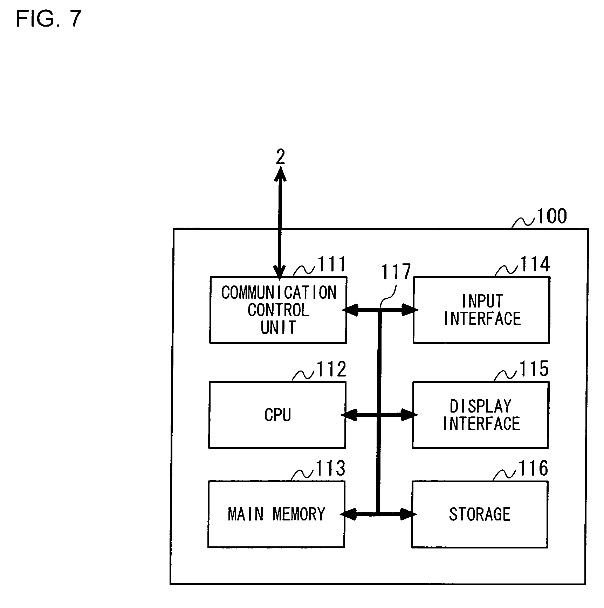

Fig. 7 shows a circuit configuration of the game support server 100. The game support server 100 mainly includes a communication control unit 111, a CPU 112, main memory 113, an input interface 114, a display interface 115, and storage 116. Such components are electrically connected via a bus 117.

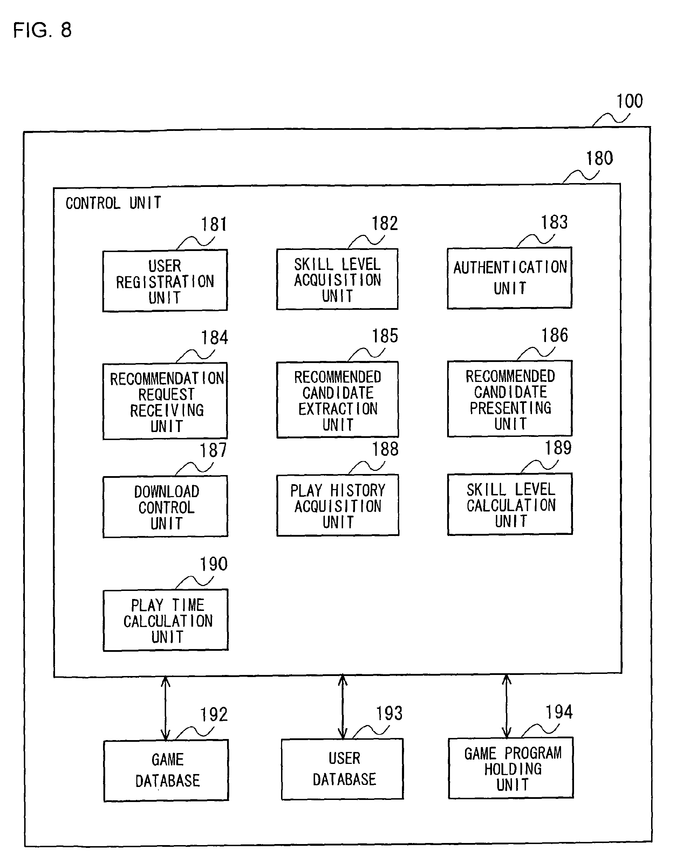

The communication control unit 111 is configured to control communication between the game support server 100 and other apparatuses via the Internet 2. The CPU 112 is configured to execute a program or the like loaded into the main memory 113, thereby providing each functional component shown in Fig. 8. The main memory 113 is configured as RAM or the like, and is configured to store programs or data to be executed on the game support server 100. The input interface 114 is configured to receive, as an input signal, an external signal to be input to other components from an external circuit. The display interface 115 is configured to output, to an external circuit, a display signal generated by means of a program or the like executed on the CPU 112. The storage 116 is configured as an HDD or the like, and is configured to record programs, data, and so forth, used by each component of the game support server 100.

### [Functional configuration of game support server 100]

Fig. 8 shows a functional configuration of the game support server 100. The game support server 100 includes a control unit 180, a game database 192, a user database 193, and a game program holding unit 194. The control unit 180 includes a user registration unit 181, a skill level acquisition unit 182, an authentication unit 183, a recommendation request receiving unit 184, a recommended candidate extraction unit 185, a recommended candidate presenting unit 186, a download control unit 187, a play history acquisition unit 188, a skill level calculation unit 189, a play time calculation unit 190, and a history transmitting unit 191. Such functional blocks can also be realized by hardware components alone, software components alone, or various combinations thereof.

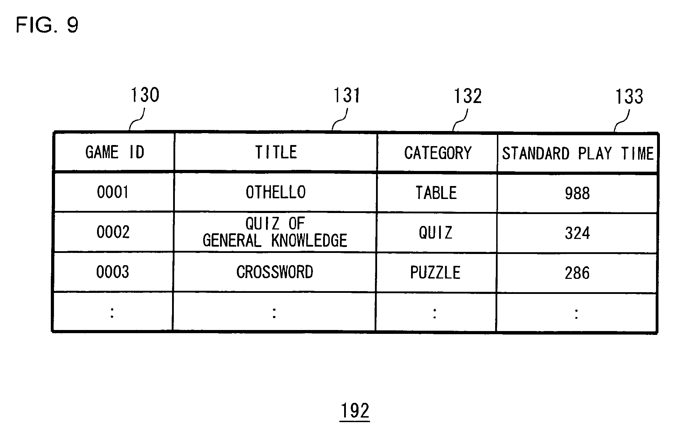

Fig. 9 shows an example of an internal data structure of the game database 192. The game database 192 includes a game ID field 130, a title field 131, a category field 132, and a standard play time field 133. The game ID field 130 stores IDs for game identification. The title field 131 stores the title of each game. The category field 132 stores a category to which each game belongs. Examples of categories include "table game", "quiz game", "puzzle game", and so forth. The standard play time field 133 stores the standard play time required for each game. At the time point at which the game support server 100 starts to supply the service, the standard play time field 133 stores the average play time obtained based upon game execution results provided by tester players or the like. Subsequently, the standard play time is updated by the play time calculation unit 190 with reference to the user play history acquired by the play history acquisition unit 188, as described later.

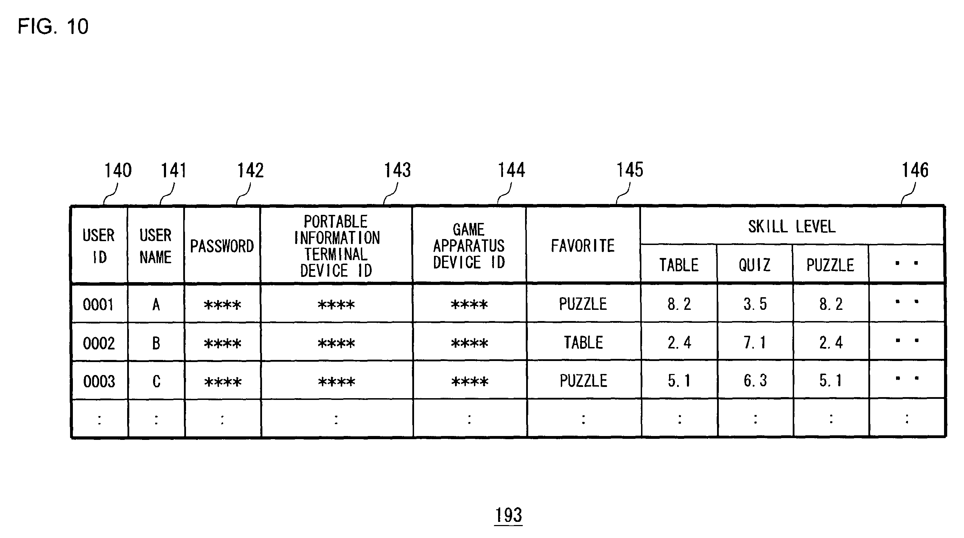

Fig. 10 shows an example of an internal data structure of the user database 193. The user database 193 includes a user ID field 140, a user name field 141, a password field 142, a portable information terminal device ID field 143, a game apparatus device ID field 144, a favorite field 145, and a skill level field 146. The user ID field 140 stores IDs for user identification. The user name field 141 stores the user names. The password field 142 stores passwords set by respective users for authentication. The portable information terminal device ID field 143 stores the device IDs of the respective portable information terminals 10 to be used by the respective users. The game apparatus device ID field 144 stored the device IDs of the respective game apparatuses 200 to be used by the respective users. With such an arrangement, the user can log in to the game support server 100 using the same user ID regardless of whether the device via which the user logs in is the portable information terminal 10 or the game apparatus 200. Furthermore, such an arrangement is capable of judging based upon the device ID whether the device via which the user log in is the portable information terminal 10 or the game apparatus 200. The favorite field 145 stores the user's preferred game categories. The skill level field 146 stores the user's skill level for each category. At the time point at which the user is registered, the skill level field 146 stores the user's self-reported skill level. The skill level is updated by the skill level calculation unit 189 with reference to the user's play history acquired by the play history acquisition unit 188, as described later.

The user registration unit 181 is configured to receive a user registration request from the portable information terminal 10 or otherwise the game apparatus 200, and to register, in the user database 193, the information with respect to the user received from the portable information terminal 10 or otherwise the game apparatus 200. When the user registration unit 181 accepts a user registration request, the skill level acquisition unit 182 is configured to acquire the skill level of the user from the portable information terminal 10 or otherwise the game apparatus 200, and to register the user's skill level thus acquired in the user database 193.

Before the user of the portable information terminal 10 receives service from the game support server 100, the authentication unit 183 is configured to receive the user's authentication information from the portable information terminal 10, and to authenticate the user with reference to the user database 193. The authentication unit 183 is configured to transmit the authentication result to the portable information terminal 10. When the authentication succeeds, the game support server 100 supplies service to the portable information terminal 10 of the user. Conversely, when the authentication fails, the game support server 100 supplies no service to the portable information terminal 10 of the user.

The recommendation request receiving unit 184 is configured to receive a recommendation request for games that match the user's desired play time. The recommendation request receiving unit 184 is configured to acquire the user's desired play time from the portable information terminal 10, and to notify the recommended candidate extraction unit 185 of this information. The recommended candidate extraction unit 185 is configured to extract the game candidates that match the user's desired play time, giving consideration to the user's skill level with reference to the game database 192 and the user database 193.

After the recommendation request receiving unit 184 receives a recommendation request from the user via the portable information terminal 10, first, the recommended candidate extraction unit 185 reads out the skill level of this user for each category from the user database 193. Subsequently, the recommended candidate extraction unit 185 corrects the standard play time stored in the game database 192 for each game based upon the user's skill level, so as to calculate the estimated user's play time. For example, such an arrangement calculates the estimated play time by multiplying the standard play time by a correction coefficient configured such that it is raised from 1 as the user's skill level becomes lower than the average skill level, and such that it is reduced from 1 as the user's skill level becomes higher than the average skill level. Thus, as the user's skill level becomes higher than the average, the estimated play time thus calculated becomes shorter than the standard play time. Conversely, as the user's skill level becomes lower than the average, the estimated play time thus calculated becomes longer than the standard play time. The correction coefficient may be set for each game, or for each game category. For example, in a case in which the game is a role-playing game or a puzzle game, it is likely that the play time varies widely according to the user's skill level. Accordingly, in this case, the contribution of the correction coefficient may be increased. In contrast, in a case in which the game is a quiz game configured to provide a predetermined number of questions, or to provide a fixed solving time, it is likely that the play time varies little regardless of the skill of the user. Thus, in this case, the contribution of the correction coefficient may be reduced. The correction coefficient may be calculated using a calculation expression including statistics such as the average value, the standard deviation, the median, etc.

The recommended candidate extraction unit 185 is configured to extract, as the recommended game candidates, the games for which the estimated play time is almost the same as the user's desired play time. Also, the recommended candidate extraction unit 185 may extract, as the recommended game candidates, the games for which the difference between the estimated play time and the desired play time is equal to or smaller than a predetermined value. Also, the recommended candidate extraction unit 185 may extract, as the recommended game candidates, the games for which the difference between the estimated play time and the desired play time is equal to or smaller than a predetermined value, and the estimated play time is shorter than the user's desired play time. Also, the recommended candidate extraction unit 185 may extract, as the recommended game candidates, a combination of multiple games for which the difference between the user's desired play time and the sum total of the estimated play times for the multiple games is equal to or smaller than a predetermined value. Also, the recommended candidate extraction unit 185 may be configured to extract the recommended game candidates with reference to the user preference information or the attribute information such as the user's favorite game category information.

The recommended candidate presenting unit 186 is configured to present the recommended game candidates thus extracted by the recommended candidate extraction unit 185 to the portable information terminal 10. In this stage, the recommended candidate presenting unit 186 may present the recommended game candidates sorted such that games in the user's favorite category are listed at the top. Also, the recommended candidate presenting unit 186 may display games in the user's favorite category in a highlighted manner. The download control unit 187 is configured to receive a game program download request from the portable information terminal 10, to read out the requested game program from the game program holding unit 194, and to transmit the game program thus read out to the portable information terminal 10.

The play history acquisition unit 188 is configured to acquire, from the portable information terminal 10 or otherwise the game apparatus 200, the information with respect to the history of games executed by the user. The skill level calculation unit 189 is configured to calculate the user's skill level with reference to the game execution history acquired by the play history acquisition unit 188, and to update the user database 193. The play time calculation unit 190 is configured to calculate the standard play time for the game with reference to the game execution history acquired by the play history acquisition unit 188, and to update the game database 192.

The skill level calculation unit 189 may raise the user's skill level for the category to which a game belongs, according to the number of times the user has played the game, or the play time which the user has spent on the game. For example, the skill level calculation unit 189 may raise, by a predetermined value, the skill level for the category to which a game belongs every time the user plays the game. Also, when the play time which the user has spent executing a game is equal to or greater than a predetermined value, the skill level calculation unit 189 may raise, by a predetermined value, the skill level for the category to which the game belongs. In such a case, the aforementioned predetermined value by which the skill level is to be raised may be increased according to an increase in time which the user has spent playing the game. Also, as the difficulty level of the game which the user has played becomes higher, the aforementioned predetermined value by which the skill level is to be raised may be increased. In this case, the game database 192 is configured to store the game difficulty level.

The skill level calculation unit 189 is configured to make a comparison between the actual play time which the user has spent playing a game and the standard play time set for the game. When the user's play time is longer than the standard play time, the skill level calculation unit 189 may reduce the user's skill level. Conversely, when the user's play time is shorter than the standard play time, the skill level calculation unit 189 may increase the user's skill level. Also, a predetermined value, which is to be added to or subtracted from the user's skill level, may be increased according to an increase in difference between the user's play time and the standard play time.

Based upon the game score of a game which the user has played, when the user's game score is higher than the standard game score, the skill level calculation unit 189 may raise the user's skill level. Conversely, when the user's game score is lower than the standard game score, the skill level calculation unit 189 may reduce the user's skill level. Also, a predetermined value, which is to be added to or subtracted from the user's skill level, may be increased according to an increase in difference between the user's game score and the standard score. In this case, the game database 192 is configured to store the standard score for each game. At the time point at which the service starts to be supplied, the game database 192 may store the average score obtained based upon game score results provided by tester players or the like, as with the standard play time. Subsequently, the standard score may be updated for each user with reference to the game play history.

The skill level calculation unit 189 may be configured to calculate the skill level using a method obtained by combining the aforementioned methods. A predetermined value by which the skill level is to be raised or reduced by the skill level calculation unit 189 may be changed for every category.

The play time calculation unit 190 may use the average of the actual play time acquired from users as the standard play time. Also, the play time calculation unit 190 may use, as the standard play time, the weighted average obtained by averaging the actual play time weighted by the aforementioned correction coefficient. Also, the average of values obtained by dividing the actual play time by a correction coefficient that corresponds to the user's skill level may be used as the standard play time.

### [Procedure of game support method]

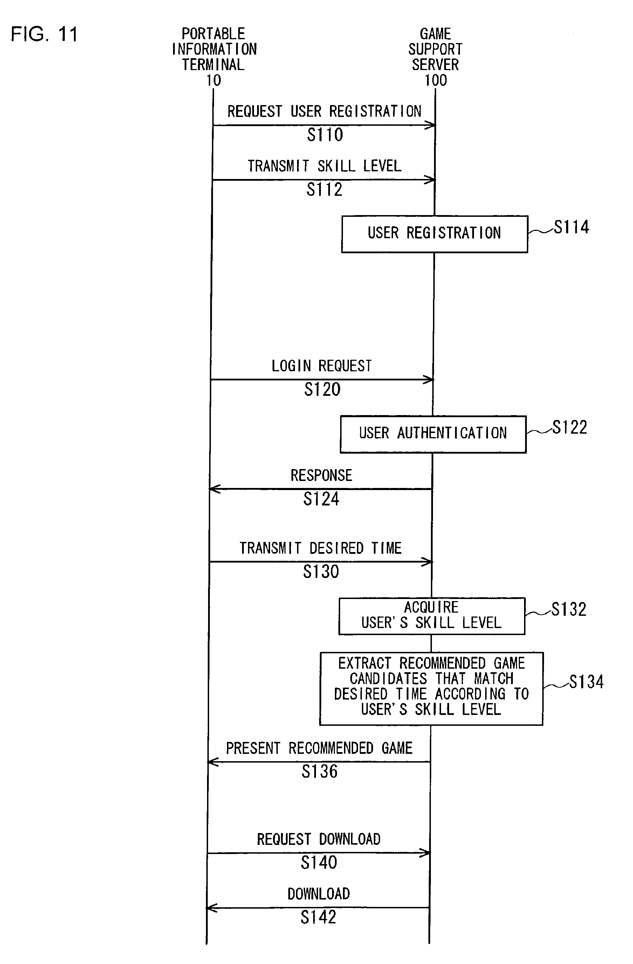

Fig. 11 is a sequence diagram which shows the procedure of a game support method according to the present embodiment. In Fig. 11 and the subsequent drawings, each step of each operation will be indicated by a combination of "S" (which is the initial letter of "Step") which represents "Step" and a number. First, the user makes a request for user registration to the game support server 100 via the portable information terminal 10 or otherwise the game apparatus 200. Description will be made below regarding an example in which the portable information terminal 10 requests the game support server 100 for user registration. The user registration request unit 81 included in the portable information terminal 10 transmits, to the game support server 100, the authentication information such as the user name, password, etc., and the user's attribute or preference information such as the user's favorite game category information etc. (S110). The skill level transmitting unit 82 included in the portable information terminal 10 transmits the user's skill level to the game support server 100 (S112). The user registration unit 181 included in the game support server 100 registers, in the user database 193, the user information received from the portable information terminal 10, and the skill level acquisition unit 182 registers the user's skill level in the user database 193 (S114).

Before the user receives the recommended game candidates from the game support server 100 when the user desires to play a game in the user's spare time and the like, first, the user logs in to the game support server 100. The login processing unit 83 included in the portable information terminal 10 transmits the user authentication information to the game support server 100 (S120). The authentication unit 183 included in the game support server 100 authenticates the user based upon the authentication information thus received, with reference to the user database 193 (S122), and transmits the authentication result to the portable information terminal 10 (S124). When the authentication fails, the user cannot receive the service from the game support server 100. Description will be made below assuming that the authentication succeeds.

When the recommendation request transmitting unit 84 included in the portable information terminal 10 transmits the user's desired play time to the game support server 100 (S130), the recommendation request receiving unit 184 included in the game support server 100 acquires the user's skill level from the user database 193 (S132), and notifies the recommended candidate extraction unit 185 of this information. The recommended candidate extraction unit 185 extracts, from the game database 192, the recommended game candidates which match the user's desired play time, based upon the user's skill level (S134). The recommended candidate presenting unit 186 presents the recommended game candidates to the portable information terminal 10 (S136). The game candidates recommended by the game support server 100 are displayed on the display 23 by the recommended candidate display unit 86 included in the portable information terminal 10.

When the user selects a desired game to be played from among the recommended game candidates, the download request unit 87 included in the portable information terminal 10 requests the game support server 100 to download the game program thus selected (S140). The download control unit 187 included in the game support server 100 reads out the game program thus requested from the game program holding unit 194, and transmits the game program thus read out to the portable information terminal 10 (S142). The game program acquisition unit 88 included in the portable information terminal 10 instructs the game program holding unit 93 to store the game program thus acquired.

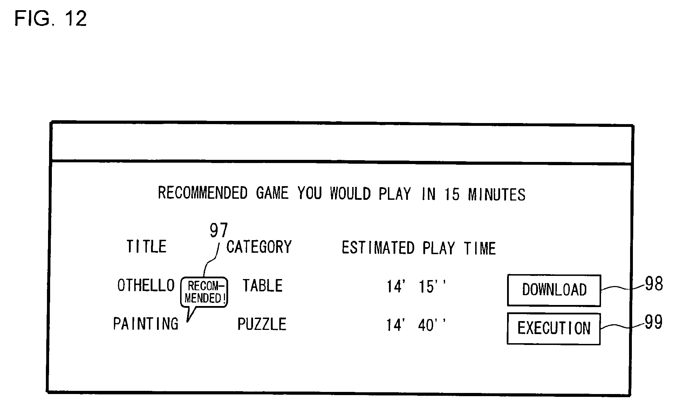

Fig. 12 shows an example of a screen displayed on the display 23 by the recommended candidate display unit 86 of the portable information terminal 10. Such an arrangement displays on the screen only a list of the game candidates with respect to which it is predicted that the user can finish the game in 15 minutes, which matches the user's desired play time. When a game program is not held by the game program holding unit 93, the recommended candidate display unit 86 displays a download button 98 for the game. Conversely, when a game program is held by the game program holding unit 93, the recommended candidate display unit 86 displays an execution button 99 for the game. When the user clicks the download button 98, the download request unit 87 requests the game support server 100 to download the corresponding game program. When the user clicks the execution button 99, the game executing unit 89 reads out the game program from the game program holding unit 93, and executes the game program thus read out. When a game belongs to a category set as the user's favorite, the recommended candidate display unit 86 displays a mark 97 for the game. The recommended candidate display unit 86 may display the game candidates in ascending order of the difference between the estimated play time and the user's desired play time. Also, the recommended candidate display unit 86 may display the game candidates in descending order of, or otherwise in ascending order of, the estimated play time. Also, the recommended candidate display unit 86 may display the game candidates in an order sorted based upon the user's attribute information or preference information.

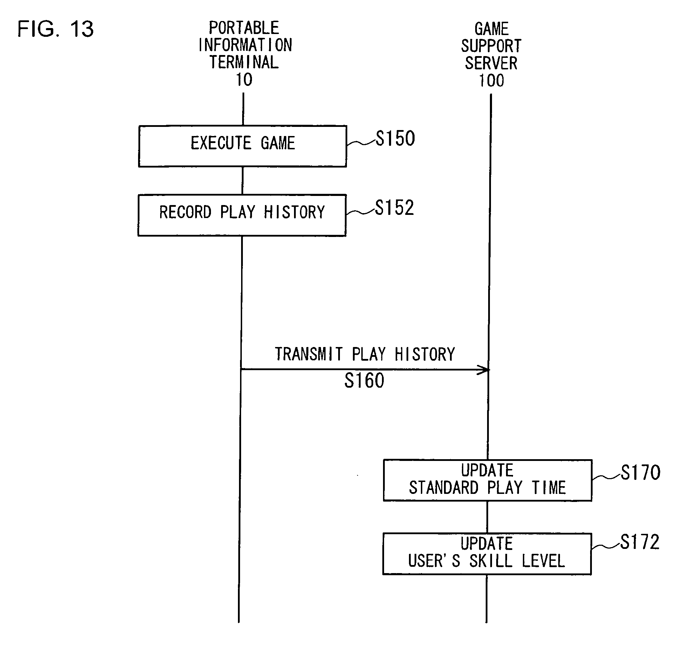

Fig. 13 is a sequence diagram which shows a procedure for updating the standard play time and the user's skill level in the game support method according to the present embodiment. The user plays a game using the portable information terminal 10 or otherwise the game apparatus 200. Description will be made below regarding an example in which the user plays a game using the portable information terminal 10. When the game executing unit 89 included in the portable information terminal 10 executes a game program (S150), the history recording unit 90 records the play history in the history holding unit 92 (S152). The history transmitting unit 91 included in the portable information terminal 10 reads out the play history from the history holding unit 92 at a predetermined timing, and transmits the play history thus read out to the game support server (S160). The play time calculation unit 190 included in the game support server 100 calculates the standard play time for the game at a predetermined timing with reference to the play history acquired from the portable information terminal 10, and updates the standard play time field 133 in the game database 192 (S170). The skill level calculation unit 189 included in the game support server 100 calculates the user's skill level at a predetermined timing with reference to the play history acquired from the portable information terminal 10, and updates the skill level field 146 in the user database 193 (S172).

The present embodiment is capable of recommending game candidates extracted with high precision such that they fit into the user's spare time when the user desires to play a game in the user's spare time or the like.

### [Second embodiment]

Description will be made in the second embodiment regarding an example in which the game apparatus 200 is shared by multiple users. In a case in which the multiple users who share the game apparatus 200 each log in to the game support server 100 using their own user IDs, the same technique as in the first embodiment can be applied. However, in a case in which the multiple users who share the game apparatus 200 each log in to the game support server 100 using a single user ID, the multiple users having different respective skill levels share the same user ID. Accordingly, with the present embodiment, the user's own skill level is transmitted to the game support server 100 every time the user requests the game support server 100 to recommend a game.

There are differences in the external configuration and the circuit configuration between the game apparatus 200 and the portable information terminal 10. However, the game apparatus 200 has the same basic circuit configuration as that of the portable information terminal 10. Furthermore, the functional configuration for providing the game support method according to the present invention is the same as that of the portable information terminal 10 according to the first embodiment.

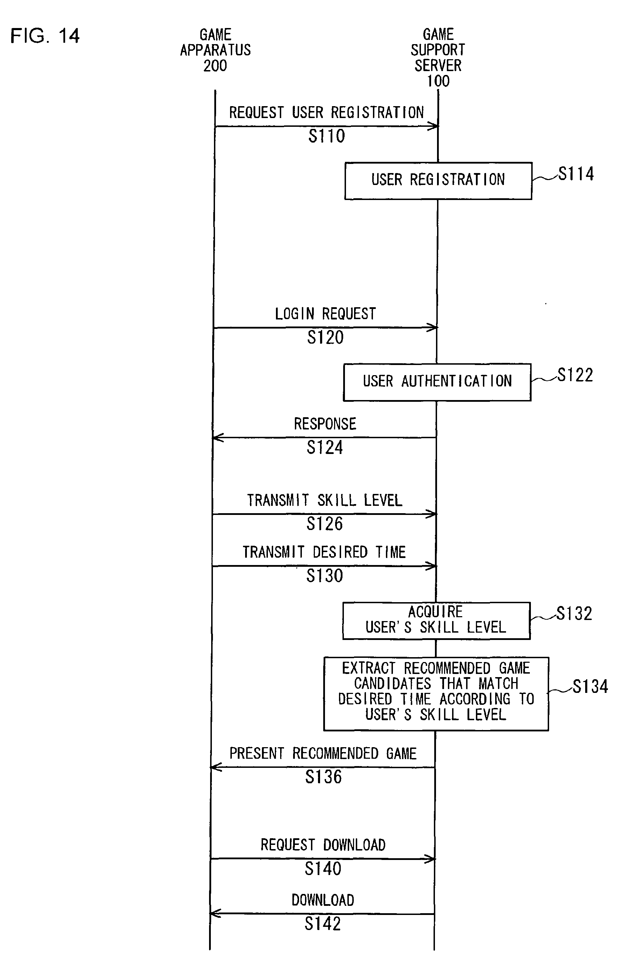

Fig. 14 is a sequence diagram which shows the procedure for providing the game support method according to the present embodiment. Description will be made regarding the point of difference from the game support method according to the first embodiment shown in Fig. 11. In the present embodiment, Step S112 in which the user's skill level is transmitted to the game support server 100 when the user is registered is omitted. Instead, when the recommendation request transmitting unit 84 included in the game apparatus 200 requests the game support server 100 to recommend the game candidates, the skill level transmitting unit 82 transmits the user's skill level to the game support server 100 (S126). The other steps are the same as those in the first embodiment.

With the present embodiment, the user database 193 included in the game support server 100 is not required to include the skill level field 146. Furthermore, the game support server 100 is not required to include the skill level calculation unit 189.

The present embodiment is capable of recommending game candidates extracted with high precision such that they match the user conditions for each user even if a single user ID is shared by multiple users.

### [Third embodiment]

With the third embodiment, such an arrangement is not configured to receive the user's skill level from the user. Instead, the skill level acquisition unit 182 included in the game support server 100 calculates the user's skill level with reference to the user's play history acquired from the portable information terminal 10 or otherwise the game apparatus 200.

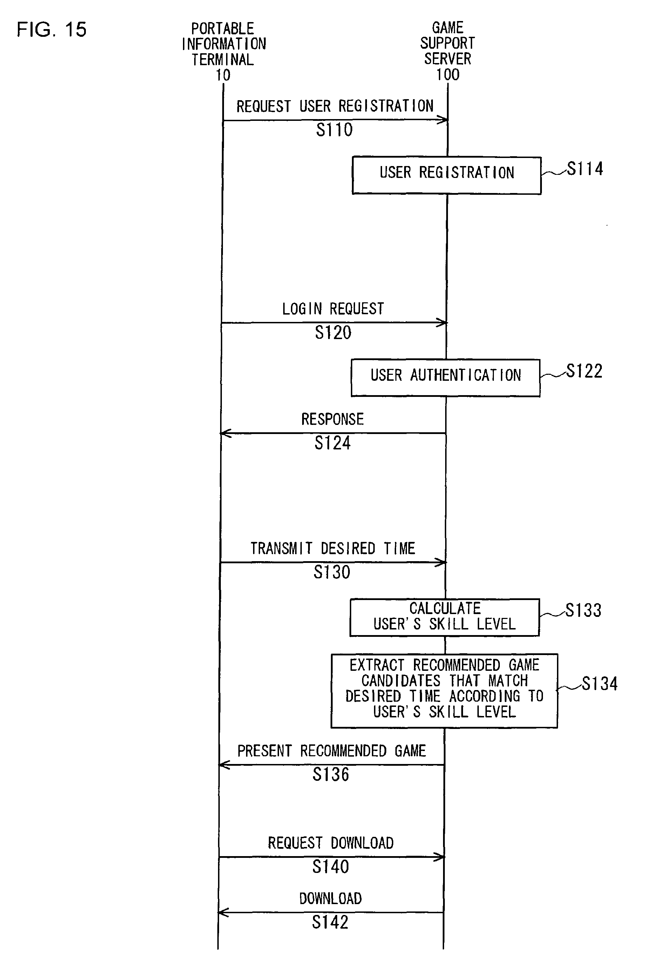

Fig. 15 is a sequence diagram which shows a procedure for providing a game support method according to the present embodiment. Description will be made regarding the point of difference from the game support method according to the first embodiment shown in Fig. 11. With the present embodiment, Step S112 in which the user's skill level is transmitted to the game support server 100 when the user is registered is omitted. Instead, when the recommendation request transmitting unit 84 included in the portable information terminal 10 or otherwise the game apparatus 200 requests the game support server 100 to recommend the game candidates, the skill level acquisition unit 182 included in the game support server 100 calculates the user's skill level (S133). When the skill level acquisition unit 182 has acquired the play history from the user, the skill level acquisition unit 182 reads out the play history from an unshown history holding unit, and calculates the skill level based upon the play history thus read out. When the skill level acquisition unit 182 has not acquired the play history from the user, the skill level acquisition unit 182 requests the portable information terminal 10 or otherwise the game apparatus 200 to perform transmission of the user's play history, and calculates the skill level with reference to the play history thus acquired. The skill level acquisition unit 182 may calculate the skill level using the same method as with the skill level calculation unit 189 described above in the first embodiment.

With the present embodiment, either the portable information terminal 10 or the game apparatus 200 is not required to include the skill level transmitting unit 82.

The present embodiment is capable of appropriately calculating the user's skill level, and recommending game candidates extracted with high precision such that they match the user's conditions without imposing on the user the need for self-reporting of the user's skill.

While description has been made regarding the present invention with reference to the embodiment, such description is for illustrative purposes only, and it is to be understood by those skilled in this art that changes and variations may be made without departing from the spirit or scope of the appended claims.

Description has been made in the embodiments regarding an arrangement in which the game support server 100 includes the skill level calculation unit 189. Also, such a skill level calculation unit may be included in either the portable information terminal 10 or otherwise the game apparatus 200. With such an arrangement, the skill level calculation unit is configured to hold the user's skill level, and to update the skill level with reference to the play history of the games executed by the game execution unit 89. The skill level transmitting unit 82 may transmit the skill level to the game support server 100 only when the user is registered, as described in the first embodiment. Also, the skill level transmitting unit 82 may transmit the skill level to the game support server 100 every time a game recommendation is requested, as described in the second embodiment. Also, the skill level transmitting unit 82 may transmit the skill level to the game support server 100 at a predetermined different timing.

### [DESCRIPTION OF THE REFERENCE NUMERALS]

1 game support system, 10 portable information terminal, 81 user registration request unit, 82 skill level transmitting unit, 83 login processing unit, 84 recommendation request transmitting unit, 85 recommended candidate acquisition unit, 86 recommended candidate display unit, 87 download request unit, 88 game program acquisition unit, 89 game executing unit, 90 history recording unit, 91 history transmitting unit, 92 history holding unit, 93 game program holding unit, 100 game support server, 181 user registration unit, 182 skill level acquisition unit, 183 authentication unit, 184 recommendation request receiving unit, 185 recommended candidate extraction unit, 186 recommended candidate presenting unit, 187 download control unit, 188 play history acquisition unit, 189 skill level calculation unit, 190 play time calculation unit, 191 history transmitting unit, 192 game database, 193 user database, 194 game program holding unit, 200 game apparatus.

### [INDUSTRIAL APPLICABILITY]

The present invention is applicable to a game support server configured to support a user of a game apparatus.

## Claims

1. A game support server comprising:
a skill level acquisition unit configured to acquire, from a first game apparatus, a skill level that indicates a user's degree of skill in a game;
a game database configured to store a standard time required to play a game;
a recommendation request receiving unit configured to acquire, from a second game apparatus, a desired time period that the user wishes to spend playing a game, and to receive a request to recommend at least one candidate game that matches the desired time;
a recommended candidate extraction unit configured to modify the standard time according to a user's skill level acquired by the skill level acquisition unit so as to calculate an estimated time that is an estimate of time to be required for the user to play a game, and to extract, as a recommended candidate game from the game database, a game if the difference between the estimated time and the desired time is less than or equal to a predetermined value; and
a recommended candidate presenting unit configured to present to the second game apparatus the recommended candidate game thus extracted by the recommended candidate extraction unit.

2. A game support server according to Claim 1, further comprising:
a play history acquisition unit configured to acquire a play history of a game played by the user via the first game apparatus; and
a skill level calculation unit configured to calculate the user's skill level based upon the user's play history acquired by the play history acquisition unit.

3. A game support server according to Claim 1, further comprising:
a play history acquisition unit configured to acquire a play history of a game played by the user via the second game apparatus; and
a play time calculation unit configured to calculate the standard time required for game play based upon the user's play history acquired by the play history acquisition unit.

4. A game support server according to any one of Claims 1 through 3, further comprising a user database configured to store the user's skill level; and
a user registration unit configured to register, in the user database, the user's skill level received from the user,
wherein the skill level acquisition unit is configured to acquire the user's skill level from the user database.

5. A game support server according to any one of Claims 1 through 3, wherein the skill level acquisition unit is configured to acquire, from the second game apparatus, the user's skill level received from the user every time the recommendation request receiving unit receives a game recommendation request from the second game apparatus.

6. A game support method comprising:
acquiring, by a skill level acquisition unit included in a computer, a skill level that indicates a user's degree of skill in a game from a first game apparatus;
acquiring, by a recommendation request receiving unit included in the computer, a desired time that the user wishes to spend playing a game, and receiving a request to recommend candidate games that match the desired time from a second game apparatus;
modifying, by a recommended candidate extraction unit included in the computer, the standard time according to the acquired user's skill level with reference to a game database storing a standard time required for game play so as to calculate an estimated time that is an estimate of time required for the user to play a game, and extracting, as a recommended candidate game from the game database, at least one game if the difference between the estimated time and the desired time is less than or equal to a predetermined value; and
presenting, by a recommended candidate presenting unit included in the computer, the recommended candidate game thus extracted to the second game apparatus.

7. A computer program comprising:
a module configured to provide a function for acquiring, from a first game apparatus, a skill level that indicates a user's degree of skill in a game;
a module configured to provide a function for acquiring, from a second game apparatus, a desired time that the user wishes to spend playing a game, and receiving a request to recommend candidate games that match the desired time;
a module configured to provide a function for modifying a standard time according to the acquired user's skill level with reference to a game database storing a standard time required for game play so as to calculate an estimated time that is an estimate of time required for the user to play a game, and for extracting, as a recommended candidate game from the game database, at least one game if the difference between the estimated time and the desired time is less than or equal to a predetermined value; and
a module configured to provide a function for presenting the recommended candidate game thus extracted to the second game apparatus.

8. A game apparatus comprising:
a recommendation request transmitting unit configured to acquire a desired time that the user wishes to spend playing a game, and to request that a game support server recommend games matching the desired time;
a recommended candidate acquisition unit configured to acquire, from the game support server, at least one recommended candidate game if the difference between the desired time and an estimated time, which is an estimate of time required for a user to play the game calculated by modifying a standard time required for game play according to a skill level indicating the user's degree of skill in the game, is less than or equal to a predetermined value; and
a recommended candidate display unit configured to display the recommended candidate game acquired by the recommended candidate acquisition unit.

9. A game apparatus according to Claim 8, further comprising a skill level transmitting unit configured to receive the user's skill level, and to transmit the user's skill level to the game support server.

10. A game support method comprising:
acquiring, by a recommendation request transmitting unit included in a computer, a desired time that the user wishes to spend playing a game, and requesting that a game support server recommends games matching the desired time;
acquiring, by a recommended candidate acquisition unit included in the computer, , at least one recommended candidate game from the game support server if the difference between the desired time and an estimated time, which is an estimate of time required for a user to play the game calculated by modifying a standard time required for game play according to a skill level indicating the user's degree of skill in the game, is less than or equal to a predetermined value; and
displaying, by a recommended candidate display unit included in the computer, the recommended candidate game thus acquired.

11. A computer program comprising:
a module configured to provide a function for acquiring a desired time that the user wishes to spend playing a game, and configured to request that a game support server recommends games matching the desired time;
a module configured to provide a function for acquiring, from the game support server, at least one recommended candidate game if the difference between the desired time and an estimated time, which is an estimate of time required for a user to play the game calculated by modifying a standard time required for game play according to a skill level indicating the user's degree of skill in the game, is less than or equal to a predetermined value; and
a module configured to provide a function for displaying the recommended candidate game thus acquired.

12. A game support system comprising:
a portable game apparatus configured to play a game; and
a game support server configured to support the user of the portable game apparatus,
wherein the game support server comprises:
a skill level acquisition unit configured to acquire a skill level that indicates a user's degree of skill in a game from a game apparatus that differs from the portable game apparatus, and configured to allow the same user as that of the portable game apparatus to play a game;
a game database configured to store a standard time required for playing a game;
a recommendation request receiving unit configured to acquire, from the portable game apparatus, a desired time that the user wishes to spend playing a game, and to receive a request to recommend candidate games that match the desired time;
a recommended candidate extraction unit configured to modify the standard time according to the user's skill level acquired by the skill level acquisition unit so as to calculate an estimated time that is an estimate of time required for the user to play a game, and to extract, as a recommended candidate game, at least one game if the difference between the estimated time and the desired time is less than or equal to a predetermined value; and
a recommended candidate presenting unit configured to present the recommended candidate game extracted by the recommended candidate extraction unit to the portable game apparatus, and
wherein the game apparatus comprises:
a recommendation request transmitting unit configured to acquire the desired time from the user, and to request that the game support server recommend games that match the desired time;
a recommended candidate acquisition unit configured to acquire, from the game support server, at least one recommended candidate game presented by the recommended candidate presenting unit; and
a recommended candidate display unit configured to display the recommended candidate game acquired by the recommended candidate acquisition unit.
